# EUROPEAN PATENT APPLICATION

(11) **EP 4 524 893 A1**
(43) Date of publication of application: **19.03.2025**
(21) Application number: 24200134.5
(22) Date of filing: 13.09.2024
(51) Int. Cl.: G06T 11/60

(54) **IMAGE PROCESSING APPARATUS, IMAGE PROCESSING METHOD, PROGRAM, AND RECORDING MEDIUM**

(30) Priority: 15.09.2023 JP 2023149914
(71) Applicant: FUJIFILM Corporation, Tokyo 106-8620 (JP)
(72) Inventor: NAKAGAWA, Tomohiro, Saitama (JP); TANAKA, Yasushi, Saitama (JP)
(74) Representative: Meissner Bolte Partnerschaft mbB

(57) **Abstract**

Provided are an image processing apparatus, an image processing method, a program, and a recording medium capable of enhancing a performance effect in a case where two or more display images are displayed.

An image processing apparatus according to one embodiment of the present invention that displays two or more display images, in a display aspect including an aspect in which the number of display images in a screen changes, includes a processor, in which the processor is configured to acquire at least one piece of information on an acquisition condition of an image or a feature of the image for a plurality of images, select a plurality of candidate images from among the plurality of images based on the at least one piece of information acquired for the plurality of images, and set a display method of the two or more display images with two or more candidate images satisfying a predetermined condition among the plurality of candidate images as the two or more display images.

## Description

### BACKGROUND OF THE INVENTION

### 1. Field of the Invention

One embodiment of the present invention relates to an image processing apparatus, an image processing method, a program, and a recording medium.

### 2. Description of the Related Art

A technique of displaying a plurality of images has already been developed, and the technique disclosed in JP2007-36737Ais an example thereof.

JP2007-36737A discloses a technique of efficiently displaying, in a slide show of images stored in a storage unit such as a memory card, all images in slides within a predetermined reproduction time to enable a user to understand a whole aspect of the images stored in the storage unit.

### SUMMARY OF THE INVENTION

In recent years, an image or a motion picture (hereinafter, referred to as image or the like) has been frequently disclosed to other persons, such as acquaintances or the public, through social networking services (SNS) or the like. In such a situation, an image or the like that can be browsed with pleasure by others is required.

In this regard, the slide show generated by the technique disclosed in JP2007-36737A is intended to be understood by a possessor himself/herself as the whole aspect of the plurality of images, and is not considered to be browsed by others. Thus, a performance effect is insufficient.

One embodiment of the present invention has been made in view of the above circumstances, and an object thereof is to provide an image processing apparatus, an image processing method, a program, and a recording medium capable of enhancing a performance effect in a case where two or more display images are displayed.

In order to achieve the above object, according to one embodiment of the present invention, there is provided an image processing apparatus that displays two or more display images, in a display aspect including an aspect in which the number of display images in a screen changes, the image processing apparatus comprising a processor, in which the processor is configured to acquire at least one piece of information on an acquisition condition of an image or a feature of the image for a plurality of images, select a plurality of candidate images from among the plurality of images based on the at least one piece of information acquired for the plurality of images, and set a display method of the two or more display images with two or more candidate images satisfying a predetermined condition among the plurality of candidate images as the two or more display images.

Further, the plurality of images may include a captured image.

Further, the acquisition condition of the image may include an imaging condition of the captured image.

Further, the imaging condition may be a condition set based on at least one of an imaging date and time, an imaging interval, an imaging event, an imaging mode, an imaging device type, or an imaging person.

Further, the processor may be configured to select the plurality of candidate images from among the plurality of images based on features of the images obtained by analyzing the plurality of images.

Further, the processor may be configured to select the two or more candidate images from among the plurality of candidate images based on features of the images obtained by analyzing the plurality of candidate images.

Further, the processor may be configured to calculate scores based on features of the image for the two or more display images to set the display method of the two or more display images in accordance with the scores.

Further, the display method may be at least one of a display position of the display image in a display region, a display angle of the display image with respect to the display region, or a display time during which an entire region of the display image is displayed.

Further, the processor may be configured to set, as the display image, at least one of a composite image obtained by combining, with an image region including a subject, a first region different from the image region or a composite image obtained by combining two or more images.

Further, the processor may be configured to set, as the display image, an image with frame region obtained by combining a frame region as the first region outside the image region.

Further, the processor may be configured to select a type of the frame region based on at least one of a preset selection criterion or input information from a user.

Further, the processor may be configured to set the display method of two or more images with frame regions according to a type of the frame region.

Further, the processor may be configured to set, as compared with a display position of the image with frame region having the frame region of a first outer shape size, a display position of the image with frame region having a second outer shape size smaller than the first outer shape size at a position away from a reference position in a display region.

Further, the processor may be configured to set a display order of two or more images with frame regions according to a type of the frame region.

Further, the processor may be configured to set the number of the two or more display images according to the number of images capable of being disposed on the same print surface during printing.

Further, in order to solve the above-described problems, according to one embodiment of the present invention, there is provided an image processing method that displays two or more display images, in a display aspect including an aspect in which the number of display images in a screen changes, the image processing method executed by a processor comprising acquiring at least one piece of information on an acquisition condition of an image or a feature of the image for a plurality of images, selecting a plurality of candidate images from among the plurality of images based on the at least one piece of information acquired for the plurality of images, and setting a display method of the two or more display images with two or more candidate images satisfying a predetermined condition among the plurality of candidate images as the two or more display images.

Further, according to one embodiment of the present invention, it is possible to realize a program for causing a computer to execute each piece of processing included in the image processing method.

Further, according to one embodiment of the present invention, it is possible to realize a computer-readable recording medium on which a program for causing a computer to execute each piece of processing included in the image processing method is recorded.

According to one embodiment of the present invention, it is possible to provide the image processing apparatus, the image processing method, the program, and the recording medium capable of enhancing the performance effect in a case where two or more display images are displayed.

### BRIEF DESCRIPTION OF THE DRAWINGS

Fig. 1 is a diagram showing a state in which a display image is displayed in image processing according to one embodiment of the present invention (Part 1).
Fig. 2 is a diagram showing a state in which a display image is displayed in the image processing according to one embodiment of the present invention (Part 2).
Fig. 3 is a diagram showing a state in which a display image is displayed in the image processing according to one embodiment of the present invention (Part 3).
Fig. 4 is a diagram showing a state in which a display image is displayed in the image processing according to one embodiment of the present invention (Part 4).
Fig. 5 is a diagram showing a configuration example of an image processing system including an image processing apparatus according to one embodiment of the present invention.
Fig. 6 is an explanatory diagram of a function of the image processing apparatus according to one embodiment of the present invention.
Fig. 7 is a diagram showing a selection screen for selecting a plurality of images in the image processing according to one embodiment of the present invention.
Fig. 8 is a diagram showing a selection screen for selecting whether or not to print a display image in the image processing according to one embodiment of the present invention.
Fig. 9 is a diagram showing a selection screen for selecting a disposition pattern of display images during printing in the image processing according to one embodiment of the present invention.
Fig. 10 is a diagram showing a selection screen for selecting a display image for which a frame region is set in the image processing according to one embodiment of the present invention.
Fig. 11 is a diagram showing a selection screen for selecting a type of the frame region in the image processing according to one embodiment of the present invention.
Fig. 12 is a diagram showing a procedure of an image processing flow according to one embodiment of the present invention.

### DESCRIPTION OF THE PREFERRED EMBODIMENTS

A specific embodiment of the present invention will be described with reference to the drawings. However, the embodiment described below is merely an example for ease of understanding of the present invention, and is not intended to limit the present invention. Further, the present invention can be changed or improved from the embodiment described below without departing from the gist of the present invention. The present invention also includes equivalents thereof.

In the present specification, the concept of "apparatus" includes a single apparatus that exerts a specific function in one apparatus, and includes a combination of a plurality of apparatuses that are distributed and present independently of each other and exert a specific function in cooperation (coordination) with each other.

Further, in the present specification, the "image" is a display target, and specifically, is an image represented by digital image data (hereinafter, referred to as image data).

Examples of the image data include lossy compressed image data, such as joint photographic experts group (JPEG) format, and lossless compressed image data, such as graphics interchange format (GIF) or portable network graphics (PNG) format.

The image data may include accessory information such as an image acquisition condition, which will be described below.

The "image" may include, for example, an image (captured image) captured by an imaging device, such as a user terminal with a camera function and a camera, and an image (created image) other than the captured image, such as a computer graphics (CG) image drawn using a computer.

Further, the "image" may be a composite image obtained by combining, with an image region including a subject, a first region different from the image region. Specifically, the image may be an image with frame region obtained by combining a frame region (corresponding to the first region) outside the image region, a decorated image obtained by combining a decorated region (corresponding to the first region) such as a stamp inside or outside the image region, or the like.

Further, the "image" may be an image having no frame region and configured of only the image region.

Here, the "frame region" is a margin region that forms a rectangular or square frame formed along an outer edge of a rectangular or square image, and more specifically, is a region that surrounds the outside of the image region including a person or the like, which is the subject. The image with frame region may be acquired, for example, in a case where the imaging device, such as a camera, having a frame region setting function performs imaging, or may be acquired by combining the frame region outside the image region using a computer or the like for the captured image.

Further, the "image" may be a composite image obtained by combining two or more images, specifically, a collage image in which a plurality of images are disposed in a template or the like.

In the present specification, the "user" is a user who uses an image processing apparatus according to the embodiment of the present invention. The use of the image processing apparatus is to use a function of the image processing apparatus, and includes not only a direct operation of the image processing apparatus but also the use of the function of the image processing apparatus through a device (for example, user terminal) capable of communicating with the image processing apparatus.

### Outline of image processing

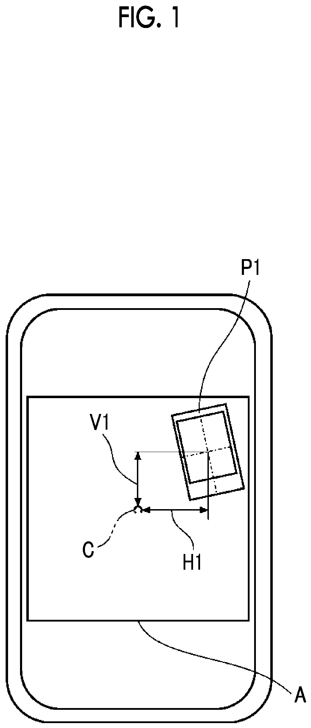

A series of pieces of processing (hereinafter, simply referred to as "image processing") related to the image processing, which is performed by using the image processing apparatus and an image processing method according to one embodiment of the present invention, will be described with reference to Figs. 1 to 4. Figs. 1 to 4 show a transition of a screen of the user terminal and are arranged in time series from Fig. 1 to Fig. 4.

Each of four display images P1, P2, P3, and P4 shown in Figs. 1 to 4 is an image with frame region.

The "user terminal" is a computer used by the user, and specifically, a smart device such as a smartphone, a tablet terminal, a notebook personal computer (PC), or the like. An application program (hereinafter, an image selection application) for selecting a plurality of images for image processing is installed in the user terminal.

In the image processing, a plurality of candidate images are selected from among the plurality of images, two or more candidate images are selected from among the plurality of candidate images as two or more display images, and a display method is set for the selected two or more display images. In the set display method, two or more display images are displayed in a display aspect including an aspect in which the number of display images in the screen changes.

Accordingly, as shown in Figs. 1 to 4, for the plurality (four) of display images P1, P2, P3, and P4, the display images are displayed in a manner of being added in steps from a rear side toward a front side of the screen in a depth direction. More specifically, the four display images P1, P2, P3, and P4 are displayed in a display region A having, for example, a quadrangular outer shape in an order of the display image P1, the display image P2, the display image P3, and the display image P4. The display image to be newly added is disposed to hide a part or all of the display image already disposed in the display region A. Alternatively, the display image to be newly added is disposed at a position where the display image already disposed in the display region A is not hidden.

The "aspect in which the number of display images changes" will be described in more detail. In a case where the display images are displayed, a part or all of the display images on the rear side may be hidden by the display image on the front side, or may not be hidden. In a case where the display image on the rear side is displayed even in a part, the number of display images in the screen changes. That is, the number of display images is increased by one by adding the display image on the front side. Such an aspect is the "aspect in which the number of display images changes".

On the contrary, in a case where all the display images on the rear side are hidden by the display image on the front side, the number of display images in the screen does not change. That is, even in a case where the display image on the front side is added, the display image on the rear side is not displayed. Thus, as a result, the number of display images in the screen does not increase or decrease. Such an aspect is an aspect in which the number of display images does not change.

In the image processing, two or more display images are assumed to be displayed in the display aspect including the aspect in which the number of display images in the screen changes.

Next, the "display method" will be described in more detail. The display method means at least one of a display position of the display image in the display region, a display angle of the display image with respect to the display region, or a display time during which an entire region of the display image is displayed.

In the examples shown in Figs. 1 to 4, the display angle of each of the four display images P1, P2, P3, and P4 is randomly set in a determined angle range (for example, -5° to +5°) with respect to the display region A. The display time of each of the four display images P1, P2, P3, and P4 is set to a constant time. On the other hand, the display position of each of the four display images P1, P2, P3, and P4 is set in accordance with a type of the frame region.

The "type of frame region" means an outer shape size of the frame region, an aspect ratio of the frame region, and the like. The "outer shape size of frame region" means an area of an inner side region surrounded by the outer shape of the frame region, that is, an area of the entire region of the image with frame region. The "aspect ratio of frame region" means a vertical-horizontal ratio of the outer shape of the frame region, that is, an aspect ratio of the image with frame region.

In the examples shown in Figs. 1 to 4, it is assumed that the display image having the frame region having a larger outer shape size is displayed at a position closer to a reference position C positioned at a center of the display region A. On the other hand, it is assumed that the display image having the frame region having a smaller outer shape size is displayed at a position away from the reference position C.

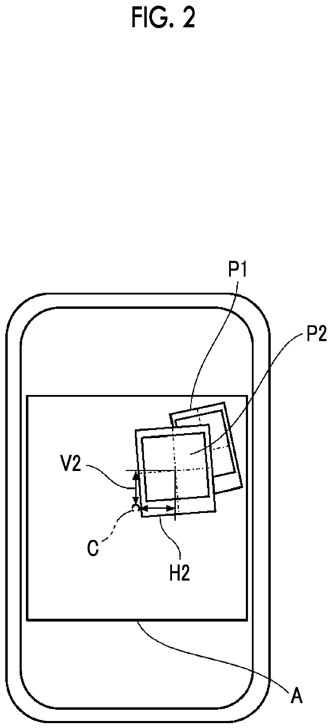

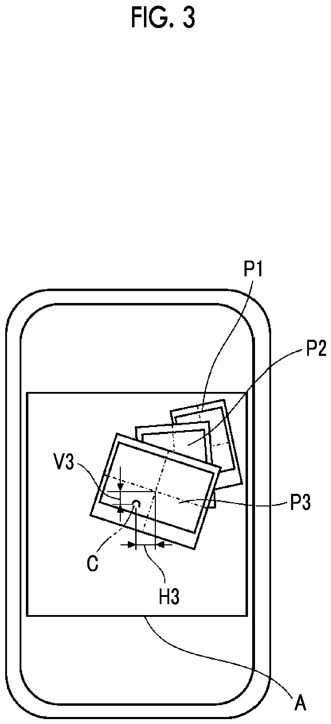

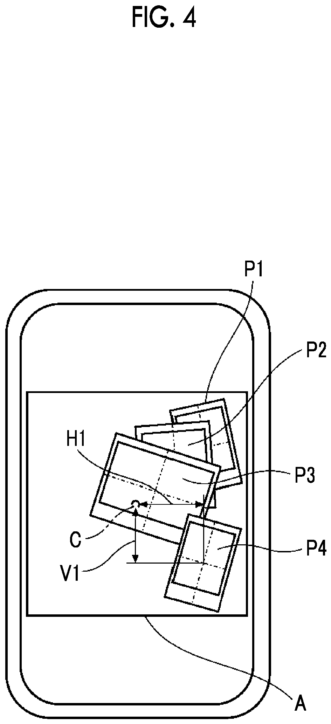

More specifically, among the four display images P1, P2, P3, and P4, the two display images P1 and P4 have the same outer shape size of the frame region and have the smallest outer shape size of the frame region, as shown in Figs. 1 and 4. As shown in Fig. 2, the display image P2 has a larger outer shape size of the frame region than the two display images P1 and P4, and has a smaller outer shape size of the frame region than the display image P3. As shown in Fig. 3, the display image P3 has the largest outer shape size of the frame region among the four display images P1, P2, P3, and P4.

Therefore, in a case where a longitudinal direction of the screen of the user terminal is assumed to be an up-down direction and a lateral direction of the screen is assumed to be a left-right direction, a center position of each of the two display images P1 and P4 is displayed at a position separated by a distance V1 in the up-down direction and a distance H1 in the left-right direction from the reference position C of the display region A in each of the up-down direction and the left-right direction, as shown in Figs. 1 and 4. As shown in Fig. 2, the center position of the display image P2 is displayed at a position separated from the reference position C of the display region A by a distance V2 shorter than the distance V1 in the up-down direction and by a distance H2 shorter than the distance H1 in the left-right direction. As shown in Fig. 3, the center position of the display image P3 is displayed at a position separated from the reference position C of the display region A by a distance V3 shorter than the distance V2 in the up-down direction and a distance H3 shorter than the distance H2 in the left-right direction.

The display positions of the four display images may be set to any position around the reference position C as long as the distances V1, V2, V3, H1, H2, and H3 are set. In this example, the display positions are assumed to be set randomly.

Based on the display method set in the above manner, the four display images P1, P2, P3, and P4 are displayed in the display region Aof the screen while the number of display images is changed in steps.

The display method described above is merely an example, and another display method may be used. For example, at least one of the display angle or the display time may be set based on the type of the frame region together with the display position.

Further, in the above example, the display image having the frame region having the larger outer shape size is displayed at the position closer to the reference position C positioned at the center of the display region A, and the display image having the frame region having the smaller outer shape size is displayed at the position away from the reference position C. However, the above examples are merely examples and do not limit the present invention. For example, the display image having the frame region having the larger outer shape size may be displayed at the position away from the reference position C positioned at the center of the display region A, and the display image having the frame region having the smaller outer shape size may be displayed at the position closer to the reference position C.

After the display method is set, display data (motion picture) in which two or more display images are displayed in the set display method is generated. The display data is disclosed to, for example, an acquaintance, the public, or the like through, for example, SNS. Examples of the display data include a slide show or a graphics interchange format (GIF) motion picture.

As described above, in the image processing apparatus according to one embodiment of the present invention, the plurality of candidate images are selected from among the plurality of images, and two or more candidate images are further selected from among the plurality of candidate images as two or more display images. That is, since the selection of the image is performed in two stages, the display image according to a determined theme or the like is appropriately selected. As described above, with the use of two or more display images according to the theme or the like, it is possible to enhance a performance effect in a case where two or more display images are displayed.

Further, in the image processing apparatus according to one embodiment of the present invention, two or more display images are displayed in the display aspect including the aspect in which the number of display images in the screen is changed. Accordingly, since not only a display content of the display image but also a state in which a relationship between two or more display images is changed is displayed, it is possible to enhance the performance effect in a case where two or more display images are displayed.

In particular, in the image processing apparatus according to one embodiment of the present invention, since the display method of two or more display images is set, it is possible to further change the relationship between the two or more display images, and as a result, further enhance the performance effect.

Further, in the image processing apparatus according to one embodiment of the present invention, in a case where a captured image is included in two or more display images, it is possible to enhance the performance effect in a case where the captured image is displayed.

Further, in the image processing apparatus according to one embodiment of the present invention, the display method is at least one of the display position, the display angle, or the display time. Therefore, in a case where two or more display images are displayed, it is possible to enhance the performance effect of at least one of the display position, the display angle, or the display time.

### Configuration example of image processing system according to one embodiment of present invention

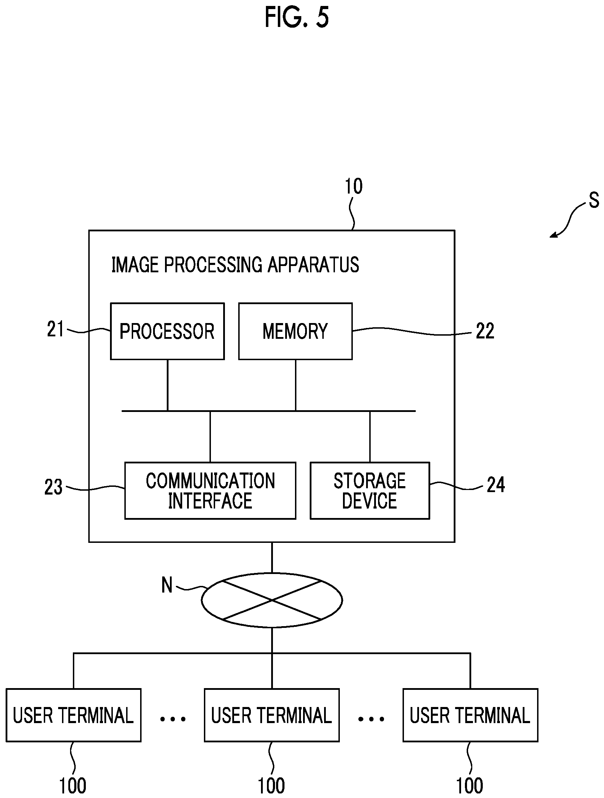

A configuration of an image processing system (hereinafter, referred to as "image processing system S") including the image processing apparatus according to one embodiment of the present invention will be described with reference to Fig. 5.

As shown in Fig. 5, the image processing system S is configured of an image processing apparatus 10 and a plurality of user terminals 100. The image processing apparatus 10 and the plurality of user terminals 100 are communicably connected to each other through a network N.

The image processing apparatus 10 is configured of a server computer. The image processing apparatus 10 may be configured of one server computer or may be configured of a plurality of server computers that are distributed in parallel. Further, the server computer constituting the image processing apparatus 10 may be a server computer for an application service provider (ASP), software as a service (SaaS), platform as a service (PaaS), or infrastructure as a service (IaaS). In a case where necessary information is input to the user terminal 100, the above-mentioned server computer performs various types of processing (calculation) based on input information, and a calculation result is output on a user terminal 100 side. That is, a function of the server computer, which is the image processing apparatus 10, can be used on the user terminal 100 side.

As shown in Fig. 5, the computer constituting the image processing apparatus 10 includes a processor 21, a memory 22, a communication interface 23, and a storage device 24.

The processor 21 is configured of, for example, a central processing unit (CPU), a micro-processing unit (MPU), a micro controller unit (MCU), a graphics processing unit (GPU), a digital signal processor (DSP), a tensor processing unit (TPU), or an application specific integrated circuit (ASIC).

The memory 22 is configured of, for example, a semiconductor memory, such as a read only memory (ROM) and a random access memory (RAM). The memory 22 stores a program (hereinafter, an image processing program) for executing the image processing. The image processing program is a program for causing the processor 21 to perform each piece of processing of the image processing method described below. The image processing program may be acquired by being read from a computer-readable recording medium, or may be acquired by being downloaded through a communication network such as the Internet or an intranet.

The communication interface 23 may be configured of, for example, a network interface card or a communication interface board. The computer constituting the image processing apparatus 10 is able to communicate with another device connected to the Internet, a mobile communication line, or the like via the communication interface 23.

The storage device 24 is configured by using, for example, a flash memory, a hard disc drive (HDD), a solid state drive (SSD), a flexible disc (FD), a magneto-optical disc (MO disc), a compact disc (CD), a digital versatile disc (DVD), a secure digital card (SD card), a universal serial bus memory (USB memory), or the like. It should be noted that the storage device 24 may be built into a computer body constituting the image processing apparatus 10 or may be mounted on the computer body in an external format.

The user terminal 100 comprises a processor, a memory, a communication interface, a recording device, a camera, an input device, and an output device.

### Function of image processing apparatus according to one embodiment of present invention

Next, a configuration of the image processing apparatus 10 according to one embodiment of the present invention will be described again from a functional aspect.

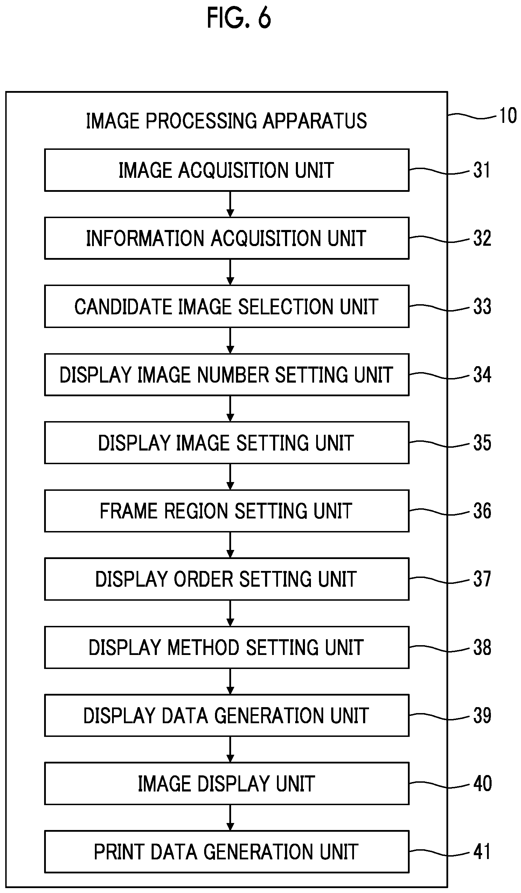

As shown in Fig. 6, the image processing apparatus 10 includes an image acquisition unit 31, an information acquisition unit 32, a candidate image selection unit 33, a display image number setting unit 34, a display image setting unit 35, a frame region setting unit 36, a display order setting unit 37, a display method setting unit 38, a display data generation unit 39, an image display unit 40, and a print data generation unit 41.

These functional units are realized by a cooperation between a hardware device included in the computer constituting the image processing apparatus 10 and the program (that is, software) installed in the computer.

Hereinafter, each functional unit will be described.

### Image acquisition unit

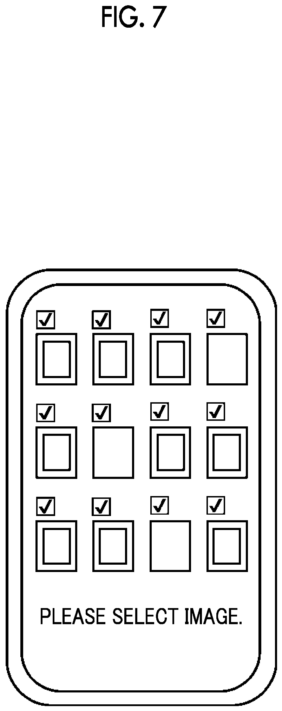

The image acquisition unit 31 acquires a plurality of images transmitted from the user terminal 100. More specifically, the user selects a plurality of images to be subjected to the image processing on a screen of the user terminal 100, the plurality of images selected from the user terminal 100 are transmitted from the user terminal 100 by the user, and thus the image acquisition unit 31 receives and acquires the plurality of images via the network N. In the example shown in Fig. 7, after the user activates the image selection application installed in the user terminal 100, the screen of the user terminal 100 transitions to a screen on which a plurality of images to be selected are displayed through a predetermined operation. In a case where a plurality of images are selected through the displayed selection screen, the plurality of selected images are transmitted from the user terminal 100 to the image processing apparatus 10, and the image acquisition unit 31 acquires the plurality of images.

The plurality of images to be selected may be the captured image, the created image, the image with frame region, the image without frame region, the decorated image, the collage image, and the like, or a mixture thereof. The example shown in Fig. 7 shows a case where both the image with frame region and the image without frame region are mixed.

The plurality of images to be selected may be images stored in a storage device of the user terminal 100, or may be images stored in an external apparatus, such as an online storage or a database server, which can communicate through the network N.

### Information acquisition unit

The information acquisition unit 32 acquires, for the plurality of images, at least one piece of information on an acquisition condition of the image or a feature of the image. The information acquisition unit 32 may acquire the information for each of the plurality of images, or may acquire the information for at least one image of the plurality of images.

### Acquisition condition of image

The "acquisition condition of image" includes an imaging condition of the captured image, a creation condition of the created image such as the CG image, and the like.

The "imaging condition" is a condition set based on at least one piece of information on an imaging date and time, an imaging interval, an imaging event, an imaging mode, an imaging device type, an imaging person, or an imaging place.

The "information on imaging date and time" includes information such as a date and a time point of imaging point in time.

The "information on imaging interval" is information related to a time interval between imaging dates and times of two captured images related to each other.

The "information on the imaging event" is information related to an imaged event, and includes, for example, information on an event name.

The "information on imaging mode" includes information related to a continuous imaging mode or an automatic imaging mode (interval mode). Both the "continuous imaging mode" and the "automatic imaging mode" are used in a case where a plurality of captured images are continuously acquired within a predetermined time. The "continuous imaging mode" is used, for example, in a case where the plurality of captured images are acquired while changing an angle of view and a position of the imaging device at the time of imaging. The "automatic imaging mode" is used, for example, in a case where the plurality of captured images are acquired without changing the angle of view and the position thereof at the time of imaging.

The "information on imaging device type" includes, for example, a model name and a manufacturer name of the imaging device such as a camera.

The "information on imaging person" includes personal information of the imaging person within a range in which the public disclosure is allowed.

The "information on imaging place" includes, for example, information on a latitude, a longitude, and an altitude of the imaging place based on a global positioning system (GPS).

On the other hand, the "creation condition" is a condition set based on at least one piece of information on a creation date and time or a creator.

The "information on creation date and time" includes information on a date and a time point of a creation point in time of the created image.

The "information on creator" includes personal information of the creator within a range in which the public disclosure is allowed.

### Feature of image

The "feature of image" is obtained by analyzing the plurality of images. The feature of the image is information related to the image quality of each region of the image, a gradation value of pixels included in each region, and information on a subject estimated from these pieces of information. The information on the subject may include a type of the subject, a state of the subject, a position of the subject in the image, and a facial expression in a case where the subject is a person. In a case where the subject is an object, for example, information related to the object specifying an event such as a sports day and a wedding ceremony, more specifically, information on a wedding dress or the like may be included. In a case where the subject is a landscape, for example, information related to a landscape for specifying a mountain, a sea, a sky, or the like may be included. In a case where an imaging range (angle of view or the like) is different even in the same landscape (same place), a different subject may be used.

Further, it is desirable that the feature of the image can be digitized, vectorized, or tensorized. In this case, an analysis result of the image is a feature of the digitized, vectorized, or tensorized image, that is, a feature amount.

In the present specification, the "feature of image" means a feature in the image region and is distinguished from a feature of the frame region surrounding the outside of the image region. The "feature of frame region" will be described below.

### Candidate image selection unit

The candidate image selection unit 33 selects the plurality of candidate images from among the plurality of images based on the at least one piece of information acquired for the plurality of images. The candidate image may include an image (for example, image with frame region and decorated image) obtained by combining, with the image region including the subject, the first region (for example, frame region and decorated region) different from the image region and an image (for example, collage image) obtained by combining two or more images (image regions).

Hereinafter, two selection methods will be described as examples.

A first selection method is based on the acquisition condition of the image. As an example, the plurality of images continuously captured in the continuous imaging mode or the automatic imaging mode are selected as the plurality of candidate images based on the information related to the continuous imaging mode or the automatic imaging mode in the imaging condition.

As described above, in the image processing apparatus 10, it is possible to select the plurality of candidate images from among the plurality of captured images based on the condition set based on the imaging condition of the captured image, more specifically, at least one of the imaging date and time, the imaging interval, the imaging event, the imaging mode, the imaging device type, or the imaging person.

A second selection method is based on the feature of the image. The candidate image selection unit 33 selects the plurality of candidate images from among the plurality of images based on the feature of the image obtained by analyzing the plurality of images.

For example, the candidate image selection unit 33 may compare the feature amounts of the subject included in the plurality of images to calculate a similarity degree of the subject, and may select a determined number of images as the candidate images in order from the image having a high similarity degree of the subject. Alternatively, on the contrary, a determined number of images may be selected as the candidate images in order from the image having a low similarity degree of the subject.

As still another example, the candidate image selection unit 33 calculates scores of the plurality of images based on the feature amount of the subject, and selects a determined number of images as the candidate images in order from the image having a high score. For example, in a case where the subject is a person, the scores of the plurality of images may be calculated based on the feature amount such as a smiling face degree or the number of persons, and a predetermined number of images may be selected as the candidate images in order from the image having a high score.

As described above, in the image processing apparatus 10, it is possible to select the plurality of candidate images from among the plurality of images based on the feature of the image obtained by analyzing the plurality of images.

### Display image number setting unit

The display image number setting unit 34 sets the number of display images to be displayed in the display region of the screen.

Hereinafter, a method of setting the number of display images will be described with four setting methods as an example.

As a first setting method, the total number of the plurality of selected candidate images is set as the number of display images.

As a second setting method, an upper limit is set for the number of display images. In a case where the number of the plurality of candidate images is equal to or larger than the upper limit, the upper limit number is set as the number of display images. In a case where the number of the plurality of candidate images is smaller than the upper limit, the number of the plurality of candidate images is set as the number of display images.

As a third setting method, the number of images input by the user is set as the number of display images.

As a fourth setting method, in a case where the user prints the display image, the number of two or more display images is set according to the number of images that can be disposed on the same print surface during printing. Accordingly, in a case where two or more display images are displayed, it is possible to display the number of display images according to the number of images during printing.

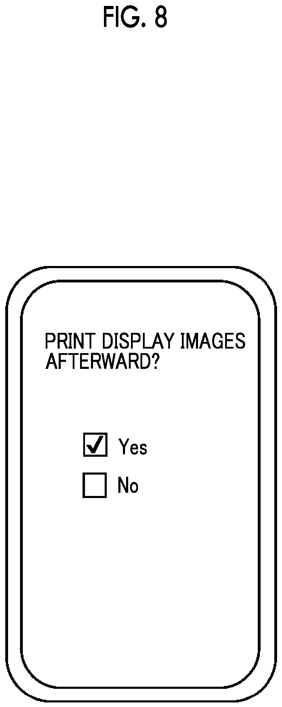

The fourth setting method will be described in more detail. The screen of the user terminal 100 transitions to a screen shown in Fig. 8, and a screen for requesting selection of whether or not to print two or more display images afterward is displayed.

In a case where the user selects not to print the display image, the number of display images is set by any one of the first to third setting methods described above.

On the other hand, in a case where the user selects to print the display image, the number of display images is set by the fourth setting method.

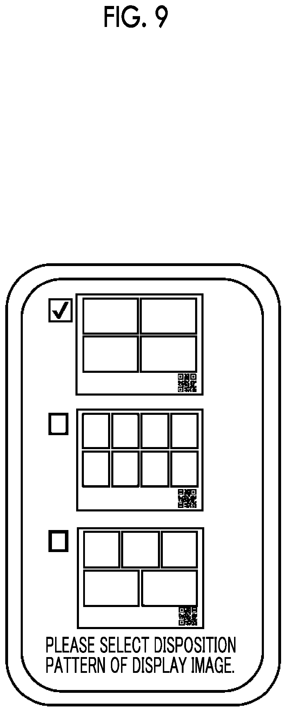

More specifically, the screen of the user terminal 100 transitions to a screen shown in Fig. 9, a plurality of candidates of a disposition pattern of the two or more display images disposed on the same print surface are displayed, and a screen for requesting to select any one disposition pattern from among the disposition pattern candidates is displayed.

The "disposition pattern" may be a pattern in which a plurality of display images having the same outer shape size are disposed on the same print surface or may be a pattern in which a plurality of display images having different outer shape sizes are disposed on the same print surface. The number of display images disposed on the same print surface may be, for example, a square value of n (n is a natural number of 2 or more), or may be set to a number based on the square value of n.

In the above-described example, in a case where the user selects to print the display image, the number of display images is set by the fourth setting method, but the present disclosure is not limited thereto. For example, even in a case where the user selects to print the display image, the number of display images may be set by any one of the first to third setting methods described above. That is, the number of display images included in the display data (motion picture) may be set to a value different from the number of images disposed on the same print surface during printing.

### Display image setting unit

The display image setting unit 35 sets two or more candidate images that satisfy a predetermined condition, among the plurality of candidate images, as two or more display images.

The "predetermined condition" is a condition set based on the number of display images set in the display image number setting unit 34 and at least one piece of information on the acquisition condition of the image or the feature of the image. In other words, the display image setting unit 35 selects two or more candidate images according to the number of display images from among the plurality of candidate images, based on the number of display images and at least one piece of information on the acquisition condition of the image or the feature of the image, and sets the selected two or more candidate images as the two or more display images.

More specifically, the display image setting unit 35 may select two or more candidate images from among the plurality of candidate images, based on the feature of the image obtained by analyzing the plurality of candidate images, and set the selected two or more candidate images as the two or more display images.

For example, the display image setting unit 35 may compare the feature amounts of the subject included in the plurality of candidate images to calculate the similarity degree of the subject, and may set the number of images set by the display image number setting unit 34 as the display images in order from the candidate image having a high similarity degree of the subject. Alternatively, on the contrary, the number of images set by the display image number setting unit 34 may be set as the display images in order from the candidate image having a low similarity degree of the subject.

As still another example, the display image setting unit 35 may calculate scores of the plurality of candidate images based on the feature amount of the subject, and set the number of images set by the display image number setting unit 34 as the display images in order from the candidate image having a high score.

As described above, in the image processing apparatus 10, it is possible to display two or more candidate images selected by the analysis results of the plurality of candidate images as the two or more display images.

The display image setting unit 35 may set, as the display image, at least one image (hereinafter, composite image) of an image (for example, image with frame region and decorated image) obtained by combining, with the image region including the subject, the first region (for example, frame region and decorated region) different from the image region or an image (for example, collage image) obtained by combining two or more images (image regions).

Therefore, in the image processing apparatus 10, in a case where the display image is the composite image, it is possible to enhance the performance effect in a case where the composite image is displayed. Further, in a case where the display image is the image with frame region, it is possible to enhance the performance effect in a case where the image with frame region is displayed.

### Frame region setting unit

The frame region setting unit 36 sets the frame region for the set two or more display images.

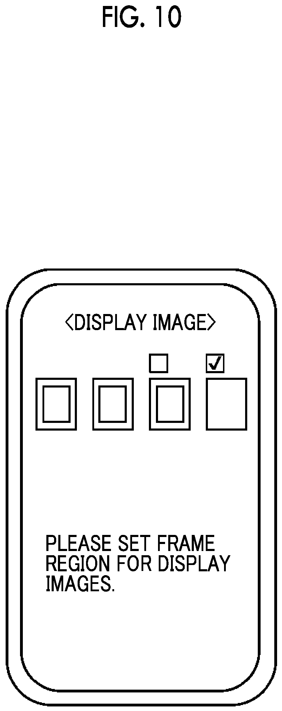

More specifically, the screen of the user terminal 100 transitions to a screen shown in Fig. 10, and a screen for requesting to set the frame region for the set two or more display images is displayed.

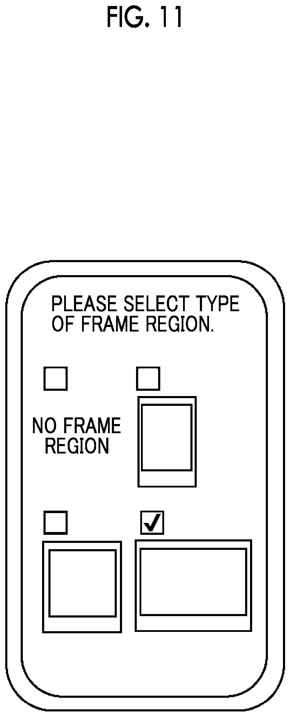

In the example shown in Fig. 10, two display images among four display images are display images for which the frame regions are already set. Therefore, the screen shown in Fig. 10 is a screen for requesting to set the frame region for remaining two display images. In a case where the display image for which the frame region is not set is selected, the screen of the user terminal 100 transitions to a screen shown in Fig. 11, and a plurality (four in Fig. 11) of types of candidates for the frame region are displayed. It should be noted that, among the plurality of types of candidates for the frame region, there is also a candidate having no frame region. In a case where the user selects any one type of the frame region, the type of the frame region is selected based on input information from the user, and an image having the frame region of the selected type (image with frame region) is set as the display image.

In the example shown in Fig. 11, in a case where the candidate having no frame region is selected, the image without frame region is set as the display image.

Further, in the example shown in Fig. 11, the image for which the frame region has already been set is not requested to set the frame region, but the present disclosure is not limited thereto. For example, the image for which the frame region has already been set may be also requested to select whether or not to change the type of the frame region, and the type of the frame region may be selected (changed) based on the input information from the user.

Further, in the example shown in Fig. 11, the type of the frame region is selected based on the input information from the user, but the present disclosure is not limited thereto. For example, the type of the frame region may be selected based on a preset selection criterion. For example, the frame region may be selected based on the selection criterion related to the aspect ratio, and specifically, the frame region having the aspect ratio closer to the aspect ratio of a target display image may be selected.

As described above, the frame region setting unit 36 selects the type of the frame region for two or more display images based on at least one of the preset selection criterion or the input information from the user. Accordingly, it is possible to set the image with frame region according to the selected type of the frame region as the display image.

### Display order setting unit

The display order setting unit 37 sets a display order of two or more display images based on the acquisition condition of the image, the feature of the image (image region), and the feature of the frame region.

Examples of the "feature of frame region" include the presence or absence of the frame region in the display image, the type of the frame region, the presence or absence of a text in the frame region, and the presence or absence of a decoration (picture, pattern, and the like) in the frame region.

Hereinafter, a method of setting the display order of the display images will be described with three setting methods as an example.

As a first setting method, there is a setting method based on the acquisition condition of the image. The display order setting unit 37 may set the display order of two or more display images in ascending or descending order of the imaging date and time based on, for example, information on the imaging date and time.

As a second setting method, there is a setting method based on the feature of the image. The display order setting unit 37 may set the display order of two or more display images in descending order or ascending order of the number of persons in the image based on, for example, the number of persons in the image in a case where the person is included in the subject. Alternatively, the display order may be set such that display images including the same subject are continuous. On the contrary, the display order may be set such that display images including the same subject are not continuous.

As a third setting method, there is a setting method based on the feature of the frame region. The display order setting unit 37 may set the display order of the two or more images with frame regions based on, for example, the type of the frame region. For example, the display order setting unit 37 may set the display order such that the display images including the same type of frame region are continuous. On the contrary, the display order may be set such that the display images including the same type of frame region are not continuous.

As described above, in the image processing apparatus 10, with the display of the display images in the display order according to the feature of the frame region, more specifically, the type of the frame region, it is possible to enhance the performance effect in a case where two or more display images are displayed.

### Display method setting unit

The display method setting unit 38 sets the display method of two or more display images. The display method setting unit 38 may set the display method for each of the two or more display images, or may set the display method for at least one display image of the two or more display images.

More specifically, the display method setting unit 38 sets the display method of the two or more display images, that is, at least one of the display position, the display angle, or the display time, based on at least one of the feature of the image (image region) or the feature of the frame region.

The display method setting unit 38 may calculate a score based on the feature of the image for the two or more display images and set the display method of the two or more display images according to the score. Accordingly, in a case where the two or more display images are displayed, performance according to the score is possible.

Further, as described above, the display method setting unit 38 may set the display method of two or more images with frame regions according to the type of the frame region. More specifically, as shown in Figs. 1 to 4, the display method setting unit 38 may set, as compared with the display position of the image with frame region having the frame region of a first outer shape size, the display position of the image with frame region having a second outer shape size smaller than the first outer shape size at a position away from the reference position in the display region. Accordingly, in a case where the two or more display images are displayed, the performance according to the type of the frame region, specifically, the outer shape size of the image with frame region is possible.

### Display data generation unit

The display data generation unit 39 generates the display data in which two or more display images are displayed in a set display method. The generated display data may be stored in the storage device of the user terminal 100, or may be stored in an external apparatus, such as an online storage or a database server, which can communicate with the image processing apparatus 10 through the network N.

### Image display unit

The image display unit 40 transmits the display data to the user terminal 100 and displays two or more display images on the screen of the user terminal 100 in the display aspect including an aspect in which the number of display images in the screen changes in the set display method.

### Print data generation unit

The print data generation unit 41 generates print data in which two or more display images are disposed on the same print surface in the selected disposition pattern.

A code region, such as a QR code (registered trademark), is assigned to the print surface, and the code region includes coded information indicating a storage destination of the display data. Therefore, with reading of the code region, it is possible to specify the storage destination of the display data from the information included in the code region and access the display data stored in the specified storage destination. With the access to the display data, it is possible to display the two or more display images indicated by the display data by the set display method.

### Image processing flow according to one embodiment of present invention

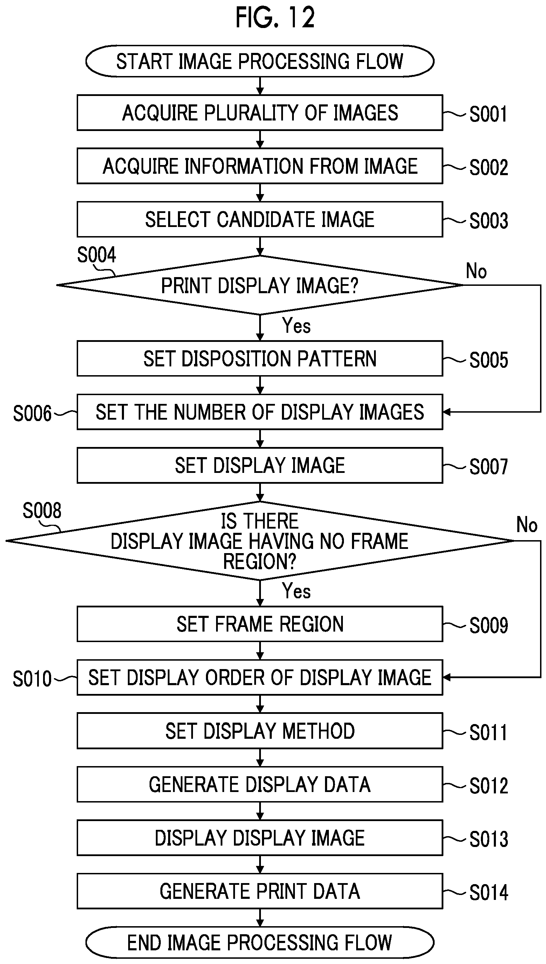

Next, an image processing flow, which is a data processing flow using the above-described image processing apparatus 10, will be described. The image processing flow employs the image processing method according to the embodiment of the present invention and proceeds along a flow shown in Fig. 12. That is, each step in the flow shown in Fig. 12 corresponds to each element constituting the image processing method according to the embodiment of the present invention.

It should be noted that the flow shown in Fig. 12 is merely an example, and an unnecessary step may be deleted or a new step may be added within a scope not departing from the gist of the present invention.

First, the user activates the image selection application installed in the user terminal 100, and thus a signal generated in conjunction with the activation of the application is transmitted to the server computer constituting the image processing apparatus 10. The image processing flow is started in response to the transmission of the signal.

In a case where a plurality of target images are transmitted from the user terminal 100, the processor 21 acquires the plurality of target images (S001). Next, the processor 21 acquires at least one piece of information on the acquisition condition of the image or the feature of the image for the plurality of images (S002).

Next, the processor 21 selects the plurality of candidate images from among the plurality of images based on the at least one piece of information acquired for the plurality of images (S003).

Next, the processor 21 requests selection of whether or not to print two or more display images afterward (S004). In a case where input information from the user indicating that the two or more display images are not printed is received, the processor 21 skips step S005 and proceeds to step S006.

On the other hand, in a case where the input information from the user indicating that the two or more display images are printed is received, the processor 21 requests the user to select any one disposition pattern of a plurality of candidates for the disposition pattern of the two or more display images to be disposed on the same print surface. Thereafter, the processor 21 sets the disposition pattern of the display image on the print surface based on the selection information by the user (S005).

Next, the processor 21 sets the number of display images to be displayed in the display region of the screen of the user terminal 100 (S006). More specifically, in step S004, in a case where the input information from the user indicating that the two or more display images are not printed is received, for example, the processor 21 sets an upper limit to the number of display images. In a case where the number of the plurality of candidate images is equal to or larger than the upper limit, the processor 21 sets the upper limit number as the number of display images. In a case where the number of the plurality of candidate images is equal to or smaller than the upper limit, the processor 21 sets the number of the plurality of candidate images as the number of display images. On the other hand, in step S004, in a case where the input information from the user indicating that the two or more display images are printed is received, the processor 21 sets the number of images based on the disposition pattern set in step S005 as the number of display images.

Next, the processor 21 sets two or more candidate images that satisfy a predetermined condition among the plurality of candidate images as the two or more display images (S007).

Next, the processor 21 determines whether or not there is a display image having no frame region among the two or more display images (S008). In a case where there is no display image having no frame region, that is, in a case where all of the two or more display images are images with frame regions, the processor 21 skips step S009 and proceeds to step S010.

On the other hand, in a case where there is a display image without frame region, the processor 21 sets the frame region for the display image without frame region (S009). More specifically, the processor 21 sets the frame region for the image without frame region based on the input information from the user related to the type of the frame region.

The processor 21 may set the image without frame region as the display image based on the input information from the user.

Further, the processor 21 may request selection of whether or not to change the type of the frame region for the image with frame region in which the frame region has already been set, and may change the type of the frame region based on the input information from the user.

Next, the processor 21 sets the display order of the two or more display images (S010). Thereafter, the processor 21 sets the display method of the two or more display images (S011).

Next, the processor 21 generates the display data in which the two or more display images are displayed in the set display method (S012). The processor 21 transmits the display data to the user terminal 100 and displays the two or more display images on the screen of the user terminal 100 in the display aspect including an aspect in which the number of display images in the screen changes in the set display method (S013).

Thereafter, the processor 21 generates the print data in which the two or more display images are disposed on the same print surface in the disposition pattern set in step S005 (S014).

The image processing flow ends at a point in time at which a series of pieces of processing described above ends.

### Other embodiments

In the image processing system, the image processing apparatus 10 is configured by the server computer, but the present disclosure is not limited thereto. For example, the image processing apparatus according to the embodiment of the present invention may be configured by the user terminal.

### Configuration of processor

The image processing apparatus according to the embodiment of the present invention and the processor provided in the image processing apparatus include various processors. Examples of the various processors include a CPU that is a general-purpose processor that executes software (program) and functions as various processing units.

Further, various processors include a programmable logic device (PLD), which is a processor of which a circuit configuration can be changed after manufacturing, such as a field programmable gate array (FPGA).

Furthermore, the various processors include a dedicated electric circuit that is a processor having a circuit configuration specially designed for executing a specific process, such as an application specific integrated circuit (ASIC).

Further, the image processing apparatus according to the embodiment of the present invention and one processing unit provided in the image processing apparatus may be configured by using one of the various processors described above, or may be configured by using a combination of two or more processors of the same type or different types, for example, a combination of a plurality of FPGAs or a combination of an FPGA and a CPU.

Further, a plurality of functional units of the image processing apparatus according to the embodiment of the present invention may be configured by one of the various processors, or two or more of the plurality of functional units may be configured by one processor.

Further, as in the above-described embodiment, one processor may be configured of a combination of one or more CPUs and software, and the processor may function as the plurality of functional units.

Further, for example, as represented by a system on chip (SoC) or the like, a form may be adopted in which a processor that realizes the functions of the entire system including the image processing apparatus according to the embodiment of the present invention and the plurality of functional units in the image processing apparatus with one integrated circuit (IC) chip is used. Further, a hardware configuration of the various processors described above may be an electric circuit (circuitry) in which circuit elements, such as semiconductor elements, are combined.

### Explanation of References

10: image processing apparatus
21: processor
22: memory
23: communication interface
24: storage device
31: image acquisition unit
32: information acquisition unit
33: candidate image selection unit
34: display image number setting unit
35: display image setting unit
36: frame region setting unit
37: display order setting unit
38: display method setting unit
39: display data generation unit
40: image display unit
41: print data generation unit
100: user terminal
A: display region
C: reference position
H1, H2, H3, V1, V2, V3: distance
N: network
P1, P2, P3, P4: display image
S: image processing system

## Claims

1. An image processing apparatus that displays two or more display images, in a display aspect including an aspect in which the number of display images in a screen changes, the image processing apparatus comprising:
a processor,
wherein the processor is configured to:
acquire at least one piece of information on an acquisition condition of an image or a feature of the image for a plurality of images;
select a plurality of candidate images from among the plurality of images based on the at least one piece of information acquired for the plurality of images; and
set a display method of the two or more display images with two or more candidate images satisfying a predetermined condition among the plurality of candidate images as the two or more display images.

2. The image processing apparatus according to claim 1,
wherein the plurality of images include a captured image.

3. The image processing apparatus according to claim 2,
wherein the acquisition condition of the image includes an imaging condition of the captured image.

4. The image processing apparatus according to claim 3,
wherein the imaging condition is a condition set based on at least one of an imaging date and time, an imaging interval, an imaging event, an imaging mode, an imaging device type, or an imaging person.

5. The image processing apparatus according to any one of claims 1 to 4,
wherein the processor is configured to select the plurality of candidate images from among the plurality of images based on features of the images obtained by analyzing the plurality of images.

6. The image processing apparatus according to any one of claims 1 to 5,
wherein the processor is configured to select the two or more candidate images from among the plurality of candidate images based on features of the images obtained by analyzing the plurality of candidate images.

7. The image processing apparatus according to any one of claims 1 to 6,
wherein the processor is configured to calculate scores based on features of the image for the two or more display images to set the display method of the two or more display images in accordance with the scores.

8. The image processing apparatus according to any one of claims 1 to 7,
wherein the display method is at least one of a display position of the display image in a display region, a display angle of the display image with respect to the display region, or a display time during which an entire region of the display image is displayed.

9. The image processing apparatus according to any one of claims 1 to 8,
wherein the processor is configured to set, as the display image, at least one of a composite image obtained by combining, with an image region including a subject, a first region different from the image region or a composite image obtained by combining two or more images.

10. The image processing apparatus according to claim 9,
wherein the processor is configured to set, as the display image, an image with frame region obtained by combining a frame region as the first region outside the image region.

11. The image processing apparatus according to claim 10,
wherein the processor is configured to select a type of the frame region based on at least one of a preset selection criterion or input information from a user.

12. The image processing apparatus according to either claim 10 or 11,
wherein the processor is configured to set the display method of two or more images with frame regions according to a type of the frame region.

13. The image processing apparatus according to any of claims 10 to 12,
wherein the processor is configured to set, as compared with a display position of the image with frame region having the frame region of a first outer shape size, a display position of the image with frame region having a second outer shape size smaller than the first outer shape size at a position away from a reference position in a display region.

14. The image processing apparatus according to any of claims 10 to 13,
wherein the processor is configured to set a display order of two or more images with frame regions according to a type of the frame region.

15. The image processing apparatus according to any one of claims 1 to 14,
wherein the processor is configured to set the number of the two or more display images according to the number of images capable of being disposed on the same print surface during printing.

16. An image processing method that displays two or more display images, in a display aspect including an aspect in which the number of display images in a screen changes, the image processing method executed by a processor comprising:
acquiring at least one piece of information on an acquisition condition of an image or a feature of the image for a plurality of images;
selecting a plurality of candidate images from among the plurality of images based on the at least one piece of information acquired for the plurality of images; and
setting a display method of the two or more display images with two or more candidate images satisfying a predetermined condition among the plurality of candidate images as the two or more display images.

17. A program for causing a computer to execute each piece of processing included in the image processing method according to claim 16.

18. A computer-readable recording medium on which a program for causing a computer to execute each piece of processing included in the image processing method according to claim 16 is recorded.
